Europäisches Patentamt

**European Patent Office**

**Office européen des brevets**

(19)

(11) Veröffentlichungsnummer: **0 023 244**
**B1**

(12) # EUROPÄISCHE PATENTSCHRIFT

(45) Veröffentlichungstag der Patentschrift:
**21.08.85**

(51) Int. Cl.⁴: **B 65 C 9/06,** B 65 G 47/24

(21) Anmeldenummer: **80102478.7**

(22) Anmeldetag: **07.05.80**

(54) **Vorrichtung zum Ausrichten von Gegenständen.**

(30) Priorität: **28.07.79 DE 2930806**

(43) Veröffentlichungstag der Anmeldung:
**04.02.81 Patentblatt 81/5**

(45) Bekanntmachung des Hinweises auf die Patenterteilung:
**21.08.85 Patentblatt 85/34**

(84) Benannte Vertragsstaaten:
**AT FR GB IT NL SE**

(56) Entgegenhaltungen:
**DE - A - 1 531 066**
**FR - A - 2 052 128**

(73) Patentinhaber: **AVERY INTERNATIONAL
CORPORATION, 150 North Orange Grove Boulevard,
Pasadena California 91103 (US)**

(72) Erfinder: **Weil, Willi, Lichtenauerweg 17,
D-2100 Hamburg 91 (DE)**

(74) Vertreter: **Eisenführ & Speiser, Martinistrasse 24,
D-2800 Bremen 1 (DE)**

**Beschreibung**

Die Erfindung betrifft eine Vorrichtung zum Ausrichten von Gegenständen, insbesondere von Behältern mit spiegelsymmetrischem, nichtrundem Querschnitt, die auf einem Förderband einer Bearbeitungsstation zugeführt werden und dabei gegebenenfalls durch ein mitlaufendes Niederhalteband von oben auf das Förderband gedrückt werden, mit zwei voneinander beabstandeten Rollen in vorgegebener Höhe über dem Förderband, die an vertikalen Achsen an Schwenkarmen drehbar gelagert sind, welche von den zwischen den Rollen hindurchlaufenden Gegenständen gegen die Wirkung eines Vorspannelementes ihrerseits um vertikale Schwenkachsen schwenkbar sind, wobei die Rollen gegebenenfalls antreibbar sein sollen.

Eine derartige Vorrichtung ist aus der DE-A-1 531 066 bekannt, bei der auf Förderbändern befindliche Gegenstände definiert so voneinander getrennt werden, daß zwischen jeweils zwei benachbarten Gegenständen ein vorgegebener Abstand entsteht. Zu diesem Zweck arbeiten die beiden Schwenkarme unabhängig voneinander. Läuft ein Gegenstand außermittig zwischen die Rollen ein, so wird zuerst nur ein Schwenkarm auswärts geschwenkt. Unter dem Andruck der Rolle wird dann der Gegenstand gegen die andere Rolle verschoben, die sich dann unter der Einwirkung des Gegenstandes undefiniert nach außen bewegt. Der Gegenstand bleibt dabei außermittig liegen und verläßt in einer solchen Stellung die Rollen.

Aus der FR-A-2 052 128 ist es bekannt, Gegenstände auf Förderbändern quer zu einer vertikalen Symmetrieebene zu verschieben, um die Gegenstände in den mittleren Bereich des Förderbandes zu bringen. Zum Distanzieren und Posi-tionieren mehrerer aufeinanderfolgender zylin-drischer Gegenstände läuft ein mit mehreren Rollen bestücktes Band die Gegenstände begleitend in Förderrichtung mit, um die Gegenstände in gleichem Abstand auf dem Förderband zu ordnen. Die Schwenkarme sind um horizontale Achsen verschwenkbar, um den Spalt zwischen den Rollen auf unterschiedliche Abmessungen der Gegenstände anzupassen. Diese bekannte Vorrichtung eignet sich insbesondere zur Beabstandung kreiszylindrischer Gegenstände; bei der Verarbeitung von Gegenständen mit nichtkreisförmigem Querschnitt ist eine symmetrische Ausrichtung der Gegenstände nicht sicher gewährleistet. Außerdem kann der Antrieb der mit Rollen bestückten, die Gegenstände begleitenden Bänder wegen der Schwenkmöglichkeit um eine horizontale Achse nur mittels komplizierter Kardanantriebe erfolgen.

Aufgabe der Erfindung ist es demgegenüber, die Vorrichtung der eingangs genannten Art derart weiterzubilden, daß auch Gegenstände mit nichtkreisförmiger, jedoch spiegelsymmetrischer Standfläche und/oder Querschnitt auf dem Förderband so ausgerichtet werden, daß die Gegenstände die Vorrichtung alle symmetrisch zu einer ortsfesten, zwischen den Rollen hindurchlaufenden vertikalen Symmetrieebene verlassen.

Diese Aufgabe wird bei der Vorrichtung der eingangs genannten Art erfindungsgemäß durch die kennzeichnenden Merkmale des Anspruches 1 gelöst.

Die Vorteile der Erfindung liegen insbesondere darin, daß die beiden Schwenkarme beim Einlaufen eines Gegenstandes stets synchron gekoppelt voneinander wegschwenken, wodurch sich die Rollen zu jedem Zeitpunkt spiegelbildlich zu der zwischen den Rollen liegenden ortsfesten vertikalen Symmetrieebene befinden. Ein zwischen die Rollen einlaufender Gegenstand, der zum Beispiel zuerst die eine Rolle berührt, wird dann weiter in den Rollenspalt hineingefördert und dabei so lange ausgerichtet, bis eine Symmetrieebene des Gegenstandes, zum Beispiel einer Flasche mit rechteckförmiger oder eliptischer Standfläche, in die vertikale ortsfeste Symmetrieebene zwischen den Rollen hineingedreht ist. Nach diesem Ausrichtvorgang läuft der Gegenstand — nun in Kontakt mit den beiden Rollen — symmetrisch durch die Vorrichtung hindurch. Dabei heben sich die von den Rollen quer zur Transportrichtung auf den Gegenstand ausgeübten Kräfte auf, so daß es beim weiteren Durchlauf und Verlassen des Rollenspaltes zu keiner Verdrehung oder Versetzung des Gegenstandes mehr kommt. Vorteilhaft ist es dabei insbesondere, daß die präzise Ausrichtung ohne produktform-spezifische Greifelemente und ohne einen zusätzlich von außen zu steuernden Bewegungsablauf möglich ist. Die Gegenstände stehen nach Verlassen der Vorrichtung weiteren Arbeitsvorgängen, zum Beispiel einem Etikettiervorgang, ausgerichtet zur Verfügung. Die erfindungsgemäße Konstruktion ist dabei so getroffen, daß bei Bedarf eine einfache Antreibbarkeit der Rollen möglich ist.

Bei einer bevorzugten Ausführungsform der Erfindung werden die beiden Rollen synchron gegenläufig in eine Drehbewegung versetzt, bei der sich die am Durchlaufspalt gegenüberliegenden Umfangsbereiche der Rollen in Transportrichtung etwa mit der Geschwindigkeit des Förderbandes drehen. Die Rollen sitzen bevorzugt fest an dem unteren Ende der vertikalen Achse, und die oberen Enden der vertikalen Achsen sind drehbar im Schwenkarm gelagert und ragen ein kurzes Stück über die Schwenkarme hinaus und werden dort von einem Antriebsmotor, z. B. über Zahnriemen, angetrieben.

Diese Ausführungsform der Erfindung besitzt den besonderen Vorteil, daß die bei der antriebsfesten Ausführungsform während eines Durchlaufs eines Gegenstandes stets verbleibende, gegen die Transportrichtung gerichtete Kraftkomponente durch den Antrieb der Rollen in Transportrichtung kompensiert wird, so daß sich nach Ausrichten der Gegenstände zwischen den Rollen im wesentlichen alle Kraftkomponenten gegeneinander aufheben. Dadurch ist es möglich, den vom Niederhalteband bewirkten Andruck der Gegenstände auf das Förderband wesentlich zu verringern, da beim Durchlauf durch die Rollen der Ausrichtvorrichtung keine zusätzliche Kraftkomponente vom Gegenstand aufgefangen werden muß. Durch den verringerten Andruck läßt sich die Ausrichtung, d. h. die Drehung der Gegenstände in die Transportrichtung hinein, gegen wesentlich verringerte Gegenkräfte (Reibungskräfte zwischen der Oberseite des Gegenstands und dem Niederhalteband bzw. der Standfläche des Gegenstands und dem Förderband) durchführen. Die Gefahr, daß sich beim Ausrichten zwischen der oberen Fläche der Gegenstände und dem Niederhalteband elastische Rückstellkräfte bilden, da die Gegenstände nicht frei gegen das Niederhalteband verdrehbar sind, wird entscheidend verringert. Die Gegenstände behalten daher nach Verlassen der Ausrichtvorrichtung ihre eingenommene Lage exakt bei.

Vorteilhafte Weiterbildungen der Erfindung sind durch die Merkmale der Unteransprüche gekennzeichnet.

Im folgenden werden Ausführungsbeispiele der Erfindung anhand der Zeichnung näher erläutert. Es zeigt

Fig. 1 eine Ansicht der erfindungsgemäßen Vorrichtung, teilweise im Schnitt in Transportrichtung;

Fig. 2 eine Seitenansicht der Vorrichtung nach Fig. 1;

Fig. 3 eine Aufsicht auf die Vorrichtung nach Fig. 1 und 2; und

Fig. 4 eine der Fig. 3 entsprechende Aufsicht auf eine Ausführungsform der Erfindung mit einem Antrieb der Rollen.

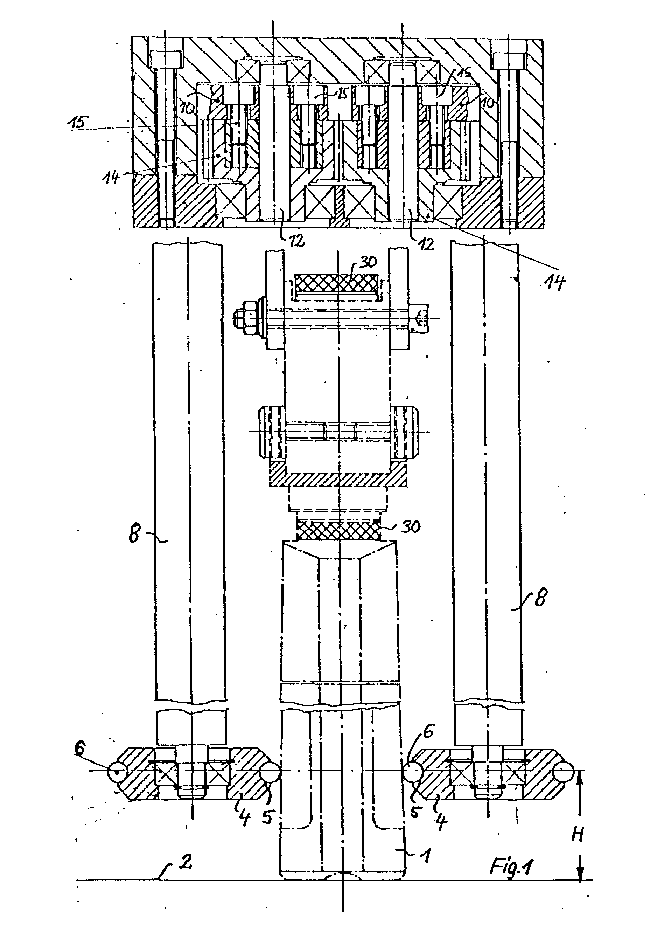

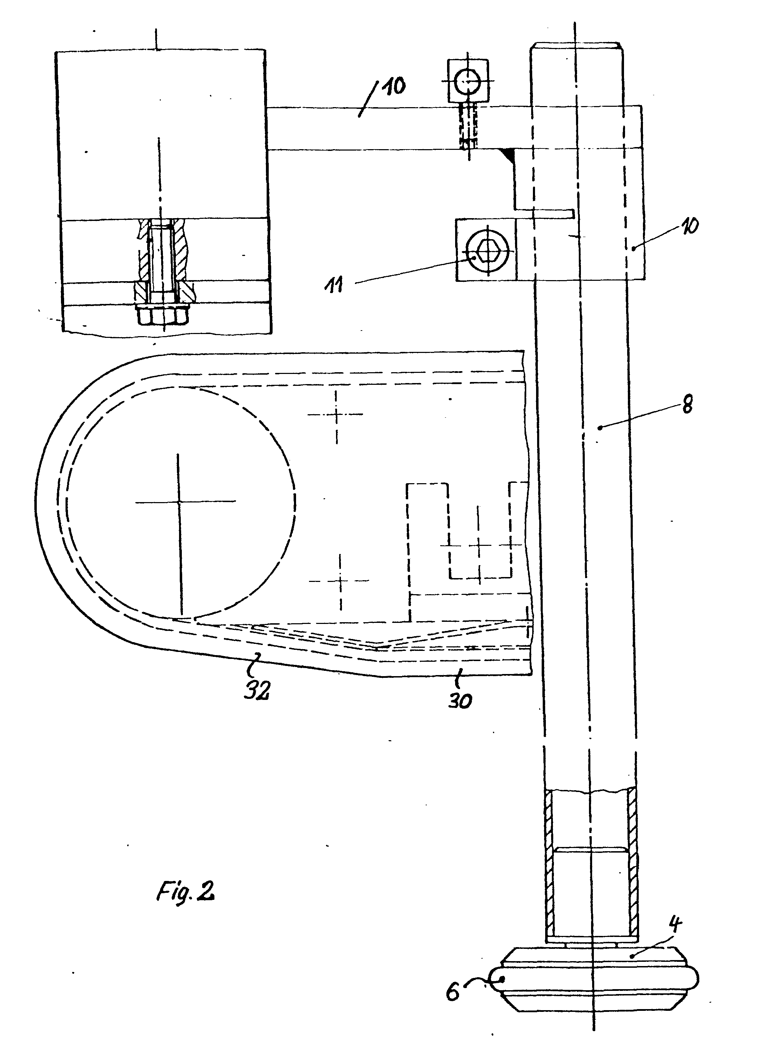

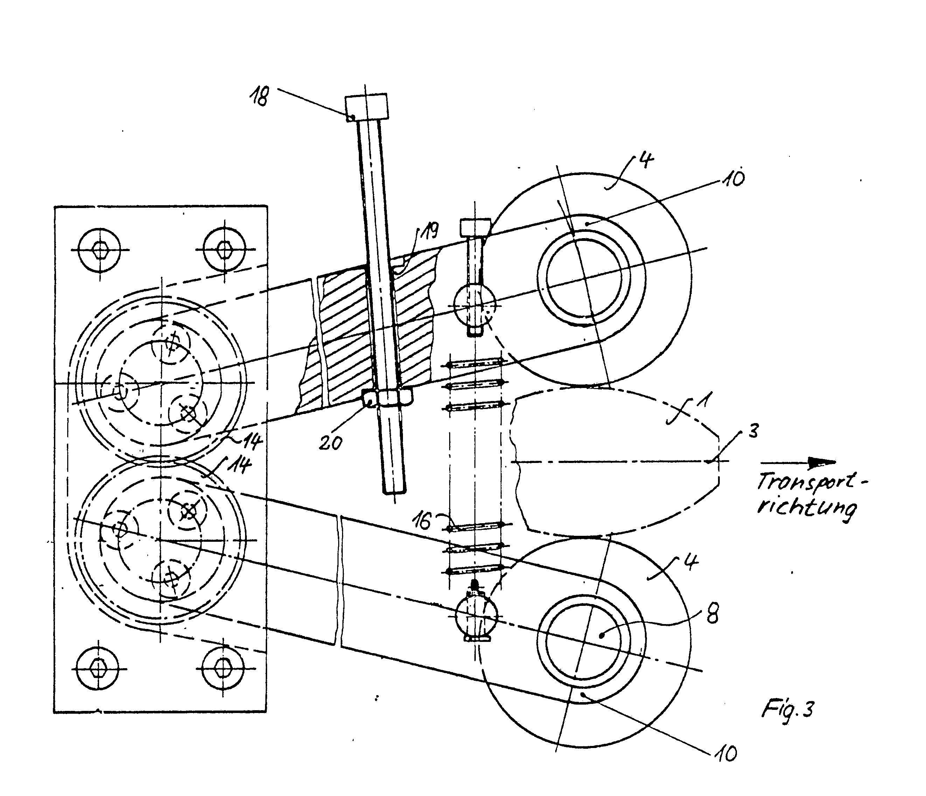

Die Fig. 1 bis 3 zeigen eine Ausführungsform der erfindungsgemäßen Vorrichtung ohne Antrieb der Ausrichtrollen. Auf einem Förderband 2 werden Gegenstände, Behälter, insbesondere Flaschen od. dgl., einer Bearbeitungsstation, z. B. einer Etikett-Abgabestation, zugeführt und dabei durch ein mitlaufendes Niederhalteband 30 von oben auf das Förderband gedrückt, um ein Kippen oder eine andere unerwünschte Bewegung der Gegenstände während des Transports zu verhindern. In vorgegebenem Abstand von Einlauf 32 des Niederhaltebands 30, vergl. Fig. 2, sind zwei voneinander beabstandete Rollen 4 in vorgegebener Höhe H über dem Förderband 2 an den unteren Enden zweier vertikaler Achsen 8 drehbar gelagert. Die oberen Enden der Achsen 8 sind bis über die obere Rücklauftrasse des Niederhaltebandes 30 verlängert und sind an dem freien Ende je eines Schwenkarmes 10 angeordnet und dort mittels einer Spannschraube 11 festgespannt, vergl. Fig. 2 und 3.

Die den freien Enden der Schwenkarme gegenüberliegenden Enden nähern sich einander an und sind an voneinander beabstandeten, vertikalen Schwenkachsen 12 angelenkt. An den angelenkten Enden der Schwenkarme 10 ist je ein Kupplungselement 14 mittels Schrauben 15 lösbar befestigt.

Die Kupplungselemente 14 sind als Zahnräder ausgebildet, die auf den Schwenkachsen 12 angeordnet sind und miteinander kämmen. Die Zahnräder 14 enthalten Einrichtungen (nicht dargestellt), die ein Kämmspiel eliminieren und sicherstellen, daß bei jeder Schwenkbewegung eines Schwenkarms 10 synchron auch der andere Schwenkarm 10 um denselben Winkel geschwenkt wird.

Die beiden Schwenkarme 10 sind mittels eines Vorspannelements, einer Schraubenfeder 16, miteinander verbunden und werden von Gegenständen 1, die in den Zwischenraum zwischen die Rollen 4 transportiert werden, gegen die Wirkung der Schraubenfeder 16 gekuppelt synchron voneinander weggeschwenkt. Während des Durchlaufs der mit einem elliptischen bzw. abgerundet rechteckförmigen Querschnitt versehenen Gegenstände 1 kommen anfänglich Kraftkomponenten zur Wirkung, welche die Längsachse oder Symmetrieebene 3 der Gegenstände in die Transportrichtung drehen. Anschließend heben sich aufgrund der Symmetrie der Ausrichtvorrichtung die senkrecht zur Transportrichtung wirkenden Kraftkomponenten — bei entsprechend symmetrischen Gegenständen — auf. Es verbleibt lediglich diejenige Kraftkomponente, die entgegen der Transportrichtung gerichtet ist und von den Mitnahmekräften des Förderbands 2 und des Niederhaltebandes 30 überwunden wird.

Der Abstand der Rolle 4 läßt sich von einer Stellschraube 18, 20 in der Ruhelage auf einen Wert einstellen, der geringfügig kleiner als der maximale Durchtrittsquerschnitt der Gegenstände 1 ist. Die Stellschraube 18 ist in einem Gewindeloch 19 innerhalb eines Schwenkarms 10 geführt und drückt gegen den anderen Schwenkarm 10.

Die Rollen 4 weisen eine Umfangsnut 5 auf, in die ein Gummiring 6 eingelassen ist, der an den Gegenständen 1 abläuft und die alleinige Kontaktzone zwischen Rollen 4 und Gegenständen 1 bildet.

Neben der Spaltbreite zwischen den Rollen 4 läßt sich auch die Höhe H der Rollen 4 über dem Förderband 2 einstellen, um eine Anpassung der Ausrichtvorrichtung an verschiedene Größen, Formen und Durchtrittsquerschnitte der transportierten Gegenstände 1 zu ermöglichen.

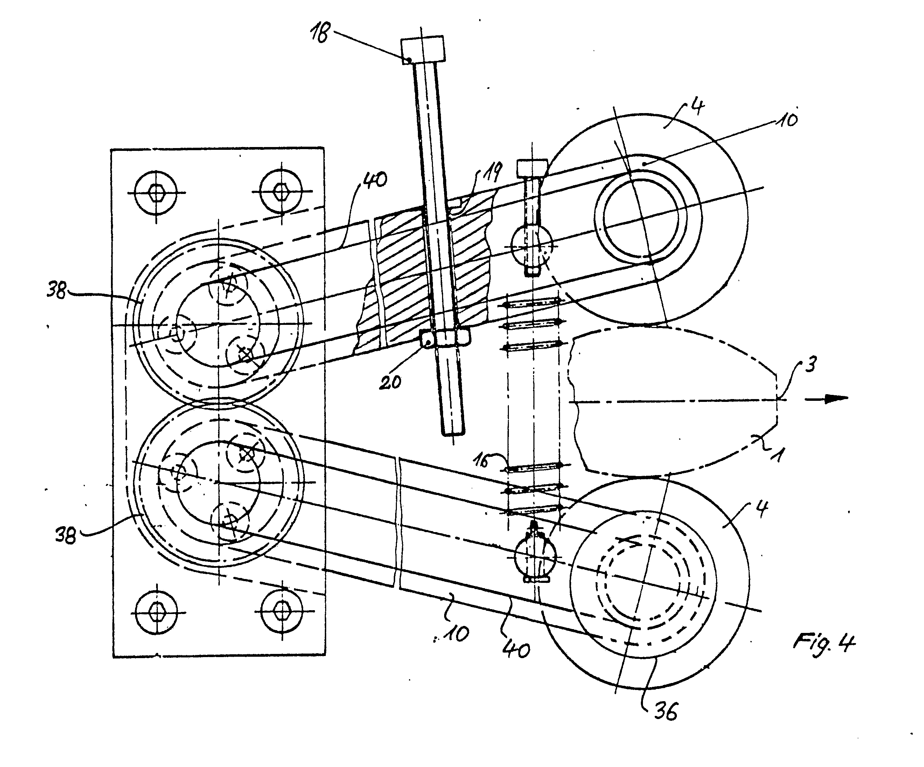

Fig. 4 zeigt die der Fig. 3 entsprechende Ansicht, bei der die Rollen 4 zusätzlich durch einen Antriebsmotor 36 derart in Drehbewegung versetzt werden, daß sich die gegenüberliegenden Umfangsbereiche der Rollen 4 in Transportrichtung drehen und an ihrem Umfang etwa die Geschwindigkeit des Förderbandes 2 besitzen. Der besseren Übersichtlichkeit ist wegen, wie schon in Fig. 3, das Niederhalteband 30, 32 nicht dargestellt. Der Motor 36 treibt z. B. eine der vertikalen Achsen 8 direkt an und ist daher koaxial über der betreffenden Achse 8 montiert. Am oberen Ende der Schwenkachsen 12 sitzen drehbar zwei Zahnräder 38 mit gestuftem Durchmesser, die mit ihrem großen Durchmesser miteinander kämmen und auf ihrem reduzierten Durchmesser je einen Zahnriemen 40 tragen. Der eine Zahnriemen wird von der Motorwelle angetrieben, der andere Zahnriemen treibt die andere vertikale Achse 8 an. Die beiden Rollen 4 sind bei dieser Ausführungsform der Erfindung fest mit den vertikalen Achsen 8 verbunden. Aufgrund des Antriebs der beiden Rollen 4 wird die von den Rollen 4 auf den Gegenstand 1 übertragene, entgegen der Transportrichtung wirkende Kraftkomponente kompensiert. Die Gegenstände 1 sind dadurch beim Durchlauf durch die Rollen 4 nur durch die sehr kleinen Ausrichtkräfte belastet. Es ist daher möglich, den vom Niederdruckband 30 gegen das Förderband wirkenden Andruck wesentlich zu verringern. Dadurch genügen sehr kleine Ausrichtkräfte, um die Gegenstände 1 gegen die Reibungswirkung des Niederhaltebands 30 sowie des Förderbands 2 in die gewünschte Stellung auszurichten. Elastische Rückstellkräfte zwischen den Gegenständen 1 und dem Niederhalteband 30, die ein unerwünschtes Verdrehen der Gegenstände nach Durchlaufen der Rollen zur Folge haben, werden weitgehend vermieden. Der Ausrichtung insbesondere von Gegenständen mit elliptischen Horizontal-Querschnitt im Bereich der Rollen 4 ist dadurch auch nach langer Betriebszeit noch sehr genau.

**Patentansprüche**

1. Vorrichtung zum Ausrichten von Gegenständen, insbesondere von Behältern mit spiegelsymmetrischem, nichtrundem Querschnitt, die auf einem Förderband (27) einer Bearbeitungsstation zugeführt werden und dabei gegebenenfalls durch ein mitlaufendes Niederhalteband (30) von oben auf das Förderband (2) gedrückt werden, mit zwei voneinander beabstandeten Rollen (4) in vorgegebener Höhe über dem Förderband (2), die an vertikalen Achsen (8) an Schwenkarmen (10) drehbar gelagert sind, welche von den zwischen den Rollen (4) hindurchlaufenden Gegenständen gegen die Wirkung eines Vorspannelementes (16) ihrerseits um vertikale Schwenkachsen (12) schwenkbar sind, wobei die Rollen (4) gegebenenfalls antreibbar sein sollen, dadurch gekennzeichnet, daß die beiden Schwenkarme (10) über Kupplungselemente (14) gekoppelt synchron voneinander weg- und aufeinander zuschwenkbar sind.

2. Vorrichtung nach Anspruch 1, dadurch gekennzeichnet, daß die Kupplungselemente (14) als Zahnräder ausgebildet sind, die mit den Schwenkarmen (10) fest verbunden sind und auf den Schwenkachsen (12) angeordnet sind und miteinander kämmen.

3. Vorrichtung nach Anspruch 2, dadurch gekennzeichnet, daß jedes Zahnrad (14) in zwei parallele Zahnradscheiben unterteilt ist, die zur Elimination des Kämmspiels gegeneinander verdrehbar sind und zusammen an ihrem Schwenkarm (10) lösbar befestigt sind.

4. Vorrichtung nach einem der vorstehenden Ansprüche, dadurch gekennzeichnet, daß die Rollen (4) synchron gegenläufig von einem Antriebsmotor (30) derart in Drehbewegung versetzt werden, daß die sich gegenüberliegenden Umfangsbereiche der Rollen (4) in Transportrichtung umlaufen und etwa die Geschwindigkeit des Förderbandes (2) besitzen.

5. Vorrichtung nach Anspruch 4, dadurch gekennzeichnet, daß die Rollen (4) fest an den unteren Enden der vertikalen Achsen (8) sitzen, daß die vertikalen Achsen drehbar in den Schwenkarmen (10) gelagert sind und die Schwenkarme (10) geringfügig überragen und an ihren oberen Enden angetrieben werden.

6. Vorrichtung nach einem der vorstehenden Ansprüche, dadurch gekennzeichnet, daß der Abstand der Rollen (4) in ihrer Ruhelage geringfügig kleiner als der zwischen den Rollen hindurchtretende Querschnitt der auszurichtenden Gegenstände ist.

7. Vorrichtung nach Anspruch 6, dadurch gekennzeichnet, daß der Abstand zwischen den Rollen (4) mittels einer Stellschraube (18) einstellbar ist, die durch einen Schwenkarm (10) geführt ist und gegen den anderen Schwenkarm drückt.

8. Vorrichtung nach einem der vorstehenden Ansprüche, dadurch gekennzeichnet, daß das Vorspannelement (16) eine Zugfeder ist, die zwischen die Schwenkarme (10) gespannt ist.

9. Vorrichtung nach einem der vorstehenden Ansprüche, dadurch gekennzeichnet, daß die Rollen (4) mit einem Reibungsbelag (6) versehen sind.

10.Vorrichtung nach Anspruch 8, dadurch gekennzeichnet, daß die Rollen (4) auf dem Außenumfang einen Gummiring (6) tragen.

11. Vorrichtung nach einem der vorstehenden Ansprüche, dadurch gekennzeichnet, daß die Höhe der Rollen (4) über dem Förderband (2) einstellbar ist.

**Claims**

1. A mechanism for the alignment of objects, in particular of containers having a non-round cross-section having mirror symmetry, which are fed on a conveyor belt (2) to a processing station and in doing so are if necessary pressed onto the conveyor belt (2) from above by a holding-down belt (30) running with them, the mechanism having two rollers (4) spaced apart at a predetermined height above the conveyor belt (2), which are rotatably supported on vertical shafts (8) in swinging arms (10) which in turn may be swung about vertical pivots (12) against the action of a prestressing member (16) by the objects passing through between the rollers (4), where the rollers (4) are if necessary to be able to be driven, characterized in that the two swinging arms (10) are coupled via coupling members (14) to be able to swing in synchronism away from and towards one another.

2. A mechanism as in claim 1, characterized in that the coupling members (14) are made as gearwheels which are connected rigidly to the swinging arms (10) and are arranged on the pivots (12) and mesh together.

3. A mechanism as in claim 2, characterized in that each gearwheel (14) is subdivided into two parallel gearwheel discs which may be twisted with respect to one another in order to eliminate play in meshing, and together are festened detachably to their swinging arm (10).

4. A mechanism as in one of the preceding claims, characterized in that the rollers (4) are set in rotary motion in synchronism in opposite directions by a driving motor (30) in such a way that the peripheral regions lying opposite one another on the rollers (4) revolve in the direction of conveyance and have approximately the speed of the conveyor belt (2).

5. A mechanism as in claim 4, characterized in that the rollers (4) are seated fixed at the bottom ends of the vertical shafts (8), that the vertical shafts are supported rotatably in the swinging arms (10) and project slightly beyond the swinging arms (10) and are driven at their top ends.

6. A mechanism as in one of the preceding claims, characterized in that the distance apart of the rollers (4) in their position of rest is slightly less than the cross-section of the objects which are to be aligned, passing through between the rollers.

7. A mechanism as in claim 6, characterized in that the pitch between the rollers (4) may be set by means of an adjusting screw (18) which is passed through one swinging arm (10) and presses against the other swinging arm.

8. A mechanism as in one of the preceding claims, characterized in that the prestressing member (16) is a tension spring which is stretched between the swinging arms (10).

9. A mechanism as in one of the preceding claims, characterized in that the rollers (4) are provided with a friction covering (6).

10. A mechanism as in claim 8, characterized in that the rollers (4) carry on the outer circumference a rubber ring (6).

11. A mechanism as in one of the preceding claims, characterized in that the height of the rollers (4) above the conveyor belt (2) is adjustable.

**Revendications**

1. Dispositif d'orientation d'objets, notamment de récipients à section sysmétrique non circulaire, qui sont amenés à poste de travail par une bande transporteuse (2) et qui sont alors, le cas échéant, pressés d'en haut sur la bande transporteuse (2) par une bande de pression (30) circulant conjointement, avec deux galets (4) placés à distance l'un de l'autre à une hauteur prédéterminée au-dessus de la bande transporteuse (2), ces galets étant montés pour tourner sur des axes verticaux (8) liés à des bras pivotants (10), qui peuvent tourner de leur côté autour d'axes de pivotement verticaux (12), sous l'action des objets passant entre les galets (4), contre l'action d'un élément de précontrainte (16), les galets (4) pouvant être commandés le cas échéant, caractérisé en ce que les deux bras pivotants (10) sont accouplés par des éléments d'accouplement (14) pour leur pivotement en synchronisme l'un à l'écart de l'autre et l'un vers l'autre.

2. Dispositif selon la revendication 1, caractérisé en ce que les éléments d'accouplement (14) sont réalisés sous forme de roues dentées assemblées solidairement avec les bras pivotants (10), disposées sur les axes de pivotement (12) et s'engrenant entre elles.

3. Dispositif selon la revendication 2, caractérisé en ce que chaque engrenage (14) est divisé en deux plateaux d'engrenages parallèles qui, pour éliminer le jeu d'engrenage, peuvent tourner l'un par rapport à l'autre et peuvent être calés conjointement de façon amovible sur leur bras pivotant (10).

4. Dispositif selon l'une des revendications précédentes, caractérisé en ce que les galets (4) sont mis en mouvement de rotation en sens inverse et en synchronisme par un moteur d'entraînement (30), de sorte que les zones périphériques des galets (4) qui se font face tournent dans le sens de transport et ont sensiblement la vitesse de la bande transporteuse (2).

5. Dispositif selon la revendication 4, caractérisé en ce que les galets (4) sont montés solidairement sur les extrémités inférieures des axes verticaux (8), en ce que les axes verticaux sont montés à rotation dans les bras pivotants (10), dépassent légèrement les bras pivotants (10) et sont entraînés à leurs extrémités supérieures.

6. Dispositif selon l'une des revendications précédentes, caractérisé en ce que la distance entre les galets (4) dans leur position de repos est légèrement plus faible que la section des objets à orienter passant entre les galets.

7. Dispositif selon la revendication 6, caractérisé en ce que la distance entre les galets (4) peut être réglée au moyen d'une vis de réglage (18), guidée à travers un bras pivotant (10) et exerçant une pression contre l'autre bras pivotant.

8. Dispositif selon l'une des revendications précédentes, caractérisé en ce que l'élément de précontrainte (16) est un ressort de traction tendu entre les bras pivotants (10).

9. Dispositif selon l'une des revendications précédentes caractérisé en ce que les galets (4) sont munis d'une garniture de friction (6).

10. Dispositif selon la revendication 8, caractérisé en ce que les galets (4) portent une bague en caoutchouc (6) sur leur périphérie.

11. Dispositif selon l'une des revendications précédentes, caractérisé en ce que la hauteur des galets (4) au-dessus de la bande transporteuse (2) est réglable.

Fig.1

Fig. 2

18

4

10

19

11

14
14

20

16

1

3

Transportrichtung

4

8

10

Fig.3

0 023 244

Fig. 4

0 023 244